Europäisches Patentamt

European Patent Office

Office européen des brevets

(11) Publication number: **0 380 066**
**A1**

## EUROPEAN PATENT APPLICATION

(21) Application number: **90101349.0**

(51) Int. Cl.⁵: **A23L 1/22**

(22) Date of filing: **24.01.90**

(30) Priority: **27.01.89 JP 18588/89**

(43) Date of publication of application:
**01.08.90 Bulletin 90/31**

(84) Designated Contracting States:
**AT BE CH DE DK ES FR GB GR IT LI LU NL SE**

(71) Applicant: **TAKEDA CHEMICAL INDUSTRIES, LTD.**
**3-6, Doshomachi 2-chome Chuo-ku**
**Osaka 541(JP)**

(72) Inventor: **Shibutani, Kosaku**
**506-7, Sendoh, Yoneda-cho**
**Kakogawa, Hyogo 675(JP)**
Inventor: **Toyota, Takeshi**
**1-3, Oharano-Kamisatokatsuyamacho**
**Nishikyo-ku, Kyoto 610-11(JP)**

(74) Representative: **von Kreisler, Alek, Dipl.-Chem. et al**
**Patentanwälte Von Kreisler-Selting-Werner**
**Deichmannhaus am Hauptbahnhof**
**D-5000 Köln 1(DE)**

(54) **Coated preparation and its use.**

(57) An edible core material preparation such as $5'$-ribonucleotides, organic acids, enzymes or sweeteners coated with a composition of a fat or oil, wax, lecithin and a higher fatty acid is disclosed. The preparation has improved uniformity of coating to show good stability and quality improving effect on food. The coating composition itself and a process for the production of the preparation are also disclosed.

EP 0 380 066 A1

## COATED PREPARATION AND ITS USE

### FIELD OF THE INVENTION

The present invention relates to a preparation of an edible core material coated with a coating composition comprising a fat or oil, wax, lecithin and a higher fatty acid, as well as the use thereof.

### BACKGROUND OF THE INVENTION

It has been known to coat fine particles of edible core materials with waxes and/or fats and oils. For example, there have been known coating of 5′-ribonucleotides (Japanese Patent Publication No. 1470/1967 and Japanese Patent Laid Open Publication No. 94366/1983), organic acids (Japanese Patent Laid Open Publication No. 100170/1986), enzymes (Japanese Patent Laid Open Publication No. 22668/1982), sweeteners (Japanese Patent Laid Open Publication Nos. 100146/1986 and 268135/1986) and the like to increase their stabilities to enzymolysis, acids, heat and the like as well as to enhance their quality improving effects upon addition thereof to food.

However, conventional coating methods of edible core materials are yet insufficient and it is requested to develop a coating method which can improve uniformity of coating and provide much higher quality.

### OBJECTS OF THE INVENTION

The main object of the present invention is to provide a more improved coating method of an edible core material.

This object as well as other objects and advantages of the present invention will become apparent to those skilled in the art from the following description.

### SUMMARY OF THE INVENTION

According to the present invention, there is provided:

(1) A composition for coating an edible core material comprising a fat or oil, wax, lecithin and a higher fatty acid;

(2) An edible core material preparation coated with the coating composition of the above item (1); and

(3) A process for the production of an edible core material preparation which comprises coating an edible core material with the coating composition of the above item (1).

### DETAILED DESCRIPTION OF THE INVENTION

The core material used in the present invention is not limited to a specific one and can be any edible fine particles. It is preferred that the core material is water-soluble. Examples thereof include seasonings and flavors (e.g., 5′-ribonucleotides), organic acids (e.g., citric acid, tartaric acid, sorbic acid, fumaric acid, L-ascorbic acid) and their salts (e.g., sodium salts, calcium salts), enzymes for food (e.g., proteolytic enzymes), sweeteners (e.g., Aspartame, Acesulham K) and the like. Examples of 5′-ribonucleotide salts include edible salts of 5′-inosinic acid and 5′-guanylic acid (e.g., water-soluble salts having a water solubility higher than 1 g/100 g at 20°C, including sodium salts, potassium salts, ammonium salts, lysine salts, histidine salts and arginine salts, etc.) and their mixtures [e.g., sodium salts of 5′-ribonucleotides (a mixture of sodium 5′-inosinate and sodium 5′-guanylate)]. In addition to these seasoning 5′-ribonucleotide salts, edible salts of 5′-adenylic acid, 5′-uridylic acid and 5′-cytidylic acid can be used. Particularly, readily water-soluble 5′-ribonucleotide salts are preferred as core materials used in the present invention.

In order to practice the present invention, preferably, the total water content of readily water-soluble 5'-ribonucleotide salts is as low as possible to improve coating efficiency. For example, the total water content is, preferably, not more than about 10% by weight, more preferably, in the range of about 2 to 7% by weight. Preferably, particle size of 5'-ribonucleotide salts is as small as possible. Usually, they are formed in fine particles having average particle size of not more than about 250 μm. The term "total water content" used herein means the total amount of all the waters contained in 5'-ribonucleotide salts regardless of crystal water, adhesion water or both (hereinafter sometimes simply referred to as water). The total water content can be determined in accordance with a method described in "Japanese Standard of Food Additives, 5th edition", i.e., Water Determination Method (Karl Fischer Method) or Loss on Drying Test Method (120°C, 4 hours). The water content of 5'-ribonucleotide salts is prescribed to be not more than 28.5% by weight for sodium 5'-inosinate and not more than 25% by weight for sodium 5'-guanylate according to "Japanese Standard of Food Additives, 4th edition"; and not more than 29.0% by weight for sodium 5'-inosinate and not more than 25.0% by weight for sodium 5'-guanylate according to "Japanese Standard of Food Additives, 5th edition". Therefore, 5'-ribonucleotide salts are stable even having a relatively high water content and, in conventional coating methods, those having a relatively high water content have been used as starting materials. To the contrary, the present invention is characterized in that 5'-ribonucleotide salts having a lower water content can be used as starting materials.

As described above, in the present invention, 5'-ribonucleotide salts having average particle size of not more than 250 μm are preferably used. More preferably, more than about 80% by weight of particles of 5'-ribonucleotide salts have particle size of between about 60 to 105 μm. Further, preferably, 5'-ribonucleotide salts have specific volume of about 1.5 to 2.5 ml/g. Although globular shape is preferred, their particular shapes are not specifically limited in so far as they have the above total water content and particle size.

For the production of fine particles of 5'-ribonucleotide salts used in the present invention, there can be employed any method for providing the above total water content and particle size. For example, in the case of a readily water-soluble 5'-ribonucleotide salt, a spray-drying of a aqueous solution of the salt is advantageously used. In spray drying, a concentration of a 5'-ribonucleotide salt is adjusted so that the resulting dried product has the desired particle size. Usually, the concentration in the range of 20 to 35% by weight are employed.

In the above spray drying, when a sugar is present in a solution together with a 5'-ribonucleotide salt, affinity of the resulting fine particles for fats and oils are improved and, thereby, coating with fats and oils becomes more uniform and better adhesion of the coating can be obtained. In this case, it is advantageous to dissolve 0.1 to 20 parts by weight of a sugar and 100 parts by weight of 5'-ribonucleotide salts in water and then the aqueous solution is spray-dried. Examples of sugars include starches which are made up water soluble by alpha conversion, dextrins (e.g., dextrins having DE of not higher than 20), polysaccharides such as guar gum, gum arabic, locust bean gum, tragacanth gum, pectin, agar, carrageenan and xanthane gum and oligosaccharides such as α-, β- and γ-cyclodextrins, sucrose, lactose, glucose, fructose, galactose and the like.

In the case of edible core materials other than 5'-ribonucleotide salts, the same fine particles as those used in conventional coating methods can be used in the present invention.

Now, the coating composition of the present invention is described below.

As the fats and oils, any edible fats and oils having melting points of about 55 to 90°C can be used in the present invention. Examples thereof include animal or vegetable fats and oils composed of fatty acid esters of glycerides (including monoglycerides, diglycerides and triglycerides) and their hydrogenated products. Choice of a particular fat or oil to be used is mainly dependent on a particular type of food and a desired releasing temperature. For example, one or more fats and oils appropriately chosen from hydrogenated tallow, hydrogenated fish oil, hydrogenated whale oil, hydrogenated rapeseed oil, hydrogenated soybean oil, hydrogenated peanut oil, hydrogenated castor oil, hydrogenated cottonseed oil, hydrogenated safflower oil, hydrogenated rice bran oil and the like can be used. Among them, there are mentioned preferably hydrogenated tallow, hydrogenated rapeseed oil and hydrogenated soybean oil.

Waxes used in the present invention include natural waxes such as animal, vegetable and mineral waxes. For example, there can be used candelilla wax, rice bran wax, carnauba wax, beeswax, paraffin wax and the like. Particularly, carnauba wax or beeswax can be used preferably. These waxes can be used alone or in combination thereof. These waxes, when mixed with fats or oils, form a dense texture and enhance coating effect. However, when the amount thereof is increased or particle size of the edible core material is excessively small, the viscosity of a dispersion tends to be increased with time and, in some cases, which causes cobwebbing during granulation by spraying or the like and, further, difficulties in workability due to a high viscosity.

The term "lecithin" used in the present invention is the generic name of phospholipids including

3

phosphatidylcholine, phosphatidylethanolamine and phosphatidylinositol and the like. Examples thereof include lecithin product having lecithin content of, at least, 60% as prescribed in "Japanese Standard of Food Additives, 5th edition". In the present invention, there can be used any lecithin, for example, soybean lecithin, rapeseed lecithin, corn lecithin, cottonseed lecithin, egg yolk lecithin and the like. Particularly, soybean lecithin can be used preferably. The lecithin reduces the viscosity of the above dispersion of the edible core material and improves workability. However, when the amount of lecithin is increased, the coating effect is liable to become inferior and, therefore, it is of importance to maintain a good balance between the above waxes and higher fatty acids described hereinafter.

Higher fatty acids used in the present invention include straight-chain saturated or unsaturated fatty acids having not less than 12 carbon atoms, preferably, 12 to 20 carbon atoms. For example, there can be used lauric acid, myristic acid, palmitic acid, stearic acid, oleic acid, linolic acid, arachic acid, arachidonic acid, behenic acid, lignoceric acid and the like. Palmitic acid, stearic acid or behenic acid can be used preferably. These higher fatty acids can be used alone or in combination thereof. When using the higher fatty acid, the texture of coating layer becomes dense, which results in remarkable improvement of properties of coating. Like waxes, the addition of the higher fatty acid increases the viscosity of a dispersion of the edible core material. However, the increase in viscosity with time is not observed. Therefore, this can be utilized to control the viscosity. For the purpose of enhancing coating effects and viscosity control, it is most effective to add a given amount of the higher fatty acid after mixing and dispersing the fat or oil, the wax, lecithin and the edible core material.

All the above four components are essential and, if any one of them is absent, the desired coated product cannot be obtained. Usually, the coating composition of the present invention contains 0.05 to 1.2 parts by weight of wax, 0.01 to 0.05 parts by weight of lecithin and 0.01 to 5 parts by weight of the higher fatty acid per 100 parts by weight of the fat or oil. Particularly, in the case of employing spray granulation method, it is more preferred, from the viewpoint of the viscosity of a dispersion and coating efficiency, to formulate 0.6 to 1.1 parts by weight of wax, 0.03 to 0.05 parts by weight of lecithin and 0.5 to 2.5 parts by weight of the higher fatty acid per 100 parts by weight of the fat or oil.

The amount of the coating composition used in the production of the coated preparation of the edible core material can be chosen so that the edible core material as its dehydrate is contained in an amount of 20 to 60% by weight based on the weight of the coated preparation. Preferably, the amount of the edible core material as its dehydrate in the coated preparation is in the range of from about 23 to 46% by weight. When the amount of the coating composition is lower than this range, coating effects are decreased. For example, in the case of 5$'$-ribonucleotide salts, its stability improving effect against phosphatase is decreased. When the amount of the coating composition exceeds the above range, the fat or oil, or wax added to the composition may often remains as undesirable white spots upon addition thereof to food.

Coating can be carried out, for example, by a method wherein fine particles of the above edible core material are added to a molten mixture of the fat or oil, the wax and lecithin and dispersed at about 60 to 105$°$C, preferably, 60 to 95$°$C, followed by admixing the higher fatty acid, adjustment of viscosity to about 60 to 800 cP and then granulation by spraying with a rotary disc or a nozzle in a cooling tower at about 10 to 35$°$C. Alternatively, there can be employed a method wherein a dispersion molten by heating is once cooled to solidify and then pulverized, a method wherein fine particles of the edible core material are fluidized in a gas flow and the coating composition of the present invention in the form of liquid (molten with heating or dissolved in an appropriate solvent) is sprayed to effect coating, or a method wherein coating is carried out with a coating pan.

Among these methods, spray granulation with cooling is preferred because it provides more uniformly coated particles. For example, in the case of spray granulation with a rotary disc, coating can be preferably carried out under operating conditions of the disc size of 100 to 200 mm in diameter, the disc heating temperature of 130 to 200$°$C, the disc rotation rate of 1200 to 5000 rpm, the feed rate of the dispersion of 200 to 600 ml/min., the temperature of the dispersion of 65 to 100$°$C and the inner temperature of the cooling tower of 10 to 35$°$C.

By subjecting the coated preparation thus obtained to double or triple coating with the same or other coating compositions, coating effects can be further improved. Regarding particle size of the preparation thus obtained, coating thickness increases with increase in particle size or the amount of the coating composition. However, in the case of the operation such as admixing to food and grinding, probability of mechanical decomposition of particles increases with increase in particle size, which results in substantial reduction of the residual ratio of the edible core material. In this respect, practically, it is desirable to coat the edible core material so that average particle size of the resulting coated preparation becomes not more than 500 $\mu$m, preferably, between 150 $\mu$m and 250 $\mu$m.

The coated preparation of the present invention can be suitably used for processed food which involves a heating step at a temperature of above the melting point of the coating composition during the production thereof, or food which are cooked at homes upon eating. Examples of such food include fish meat paste products such as kamaboko, chikuwa, fried kamaboko and fish meat sausage; animal meat products such as sausage, ham, hamburgers and meat balls; miso, delicacies, fillings for daily dishes such as dumplings staffed with meat, shao-mai and meat-buns; and flour products such as frying batter, tempura coatings and frying flour.

The preparation of the present invention is added during an appropriate mixing step prior to heating in the production steps of food. Thereby, for example, the coated preparation of a 5′-ribonucleotide salt does not undergo enzymatic action or decomposition even in the presence of phosphatase in food because fine particles of the salt are uniformly coated with the coating composition. In addition, after inactivation of phosphatase by heating, the coating composition is molten and then the 5′-ribonucleotide salt is released into food in a stable state to exhibit a good seasoning property.

As described hereinbefore, in the coated preparation obtained according to the present invention, fine particles of the edible core material are covered with the coating composition, uniformly. Therefore, even when the preparation is immersed in water at normal temperature, the elution of the core material is almost completely controlled in comparison with coated preparations obtained by conventional coating methods. Thereby, when the preparation of the present invention is added to food, decomposition of the core material by enzyme or an acid can be efficiently prevented. For example, in the case of the coated preparations of 5′-ribonucleotides, decomposition of the core material with phosphatase derived from a raw material of food is inhibited even when the coated preparation is added prior to a heating steps in the production of food. In addition, the coating composition is dissolved, while the phosphatase is inactivated with heating treatment, which results in satisfactory seasoning with the 5′-ribonucleotide salt. Moreover, a uniformly-coated product can be also obtained in the case of organic acids such as ascorbic acid and the like. For example, when the coated product is added to a fish or animal meat paste, its quality improving effect is noticeably enhanced.

Another major characteristic of the coated preparation of the present invention is that, even in storage for a long period of time, the coated preparation shows almost no surface cracking nor gap formation. That is, the coated preparation possesses excellent storage stability.

The following Examples further illustrate the present invention in detail but are not to be construed to limit the scope thereof. In the Examples, all the percents are by weight, unless otherwise stated.

Example 1

A mixture of hydrogenated rapeseed oil (3440 g), carnauba wax (33.5 g) and soybean lecithin (1.7 g) was molten with heating at 100°C and cooled to 90 to 95°C. A spray-dried product of "Ribotide" (1500 g, water content: 6.1%, dextrin content 2.5%, a mixture of sodium 5′-inosinate and sodium 5′-guanylate, produced by Takeda Chemical Industries, Ltd.) to the mixture and thoroughly dispersed. After addition of stearic acid (24.8 g), the mixture was molten and the resulting dispersion was homogenized. Then, the temperature was adjusted to 70°C and the dispersion was sprayed in a chamber at 25°C with a rotary disc type spray device (disc diameter: 150 mm, rotation rate: 1200 rpm) to obtain a coated granulation product (Sample A).

Sample A was sieved through a screen having pore size of 500 μm. As the result, 98.3 % of the particles passed through the screen and the 5′-ribonucleotide sodium content this product was 36.9%.

According to the same manner as described above, other coated granulation products were obtained except that carnauba wax was removed and the amount of hydrogenated rapeseed oil was increased (3473.5 g) to compensate for the reduced amount (Sample B); soybean lecithin was removed and the amount of hydrogenated rapeseed oil was increased (3441.7 g) to compensate for the reduced amount (Sample C); and stearic acid was removed and the amount of hydrogenated rapeseed oil was increased (3464.8 g) to compensate for the reduced amount (Sample D).

The results of an elution test on respective samples are shown in Table 1. As seen from Table 1, the coated preparation of the present invention has a low elution rate and is of good quality.

The viscosities of dispersions of respective samples at 92°C were 164 cP for Sample A, 210 cP for Sample B, 400 cP for Sample C, and 30 cP for Sample D.

Table 1

| Relationship of Elution Time versus Elution Rate | | | | |
|---|---|---|---|---|
| Elution Time | 15 min. | 30 min. | 60 min. | 120 min. |
| Sample A | 2.1 | 3.0 | 5.2 | 9.6 |
| Sample B | 26.5 | 50.2 | 72.7 | 82.5 |
| Sample C | 9.4 | 12.5 | 19.2 | 29.8 |
| Sample D | 16.0 | 36.8 | 52.7 | 76.3 |
| Elution rate (%) | | | | |

The elution test and the determination of sodium 5'-ribonucleotide were carried out as follows: .

## Elution test

Water (60 ml) at 25°C was placed in a 100 ml conical flask with ground stopper and kept in a constant temperature shaking water vessel at 25°C. A sample (1.0 g) was added to the flask and it was shaken at 130 rpm for 15 to 120 minutes. After shaking, the contents were filtered through a membrane filter with pore size of 0.45 μm. The resulting filtrate was assayed for 5'-ribonucleotide sodium content by liquid chromatography. The elution rate was expressed as the ratio of the amount of eluted 5'-ribonucleotide sodium to the 5'-ribonucleotide sodium content of the coated product.

Conditions of determination of 5'-ribonucleotide sodium

Column: MIC GEL CDR 10 (4 x 150 mm)
Column temperature: room temperature
Mobile phase: pH 4.5, 0.5 M acetate buffer
Pressure: 50 kg/cm$^2$
Flow rate: 1.0 ml
Detector: UV 254 nm
Sample volume: 20 μl

## Example 2

A mixture of hydrogenated soybean oil (3440 g), beeswax (33.5 g) and egg yolk lecithin (1.7 g) was molten with heating at 95°C and cooled to 88 to 93°C. Then, spray-dried sodium 5'-inosinate (1500 g, water content: 5.5%, dextrin content: 3%) was added to the mixture and thoroughly dispersed. After addition of behenic acid (24.8 g), the mixture was molten and the resulting dispersion was homogenized (viscosity: 182 cP at 92°C). Then, the temperature was adjusted to 70°C and the dispersion was sprayed in a chamber at 25°C with a rotary disc type sprayer (the same as that in Example 1) to obtain a coated granulated product.

The sodium 5'-inosinate content of the product was 38.0%. The elution test showed that the elution rate for 60 minutes was 5.6%.

## Example 3

A mixture of hydrogenated palm oil (6898 g), beeswax (50 g) and soybean lecithin (2.0 g) was molten with heating at 95°C and cooled to 85 to 90°C. Aspartame powder (3800 g, all the particles passed through 200 mesh) was added to the mixture and thoroughly dispersed. After addition of palmitic acid (50 g), the mixture was molten and the resulting dispersion was homogenized. Then, the temperature was adjusted to 70°C and the dispersion was sprayed in a chamber at 25°C with the same rotary disc type sprayer as that in Example 1 to obtain a coated granulated product. The aspartame content of this product was 36.8%. The elution test in water at 25°C showed that the elution rate for 60 minutes was 3.8 %.

Example 4

A mixture of hydrogenated beef tallow (3242 g), beeswax (31.5 g), soybean lecithin (1.5 g) and stearic acid (25.0 g) was molten with heating at 100°C and cooled to 90 to 95°C. Pulverized calcium ascorbate (1700 g, water content: not more than 0.5 %, all the particles passed through 200 mesh). After addition of stearic acid (25.0 g), the mixture was molten and the resulting dispersion was homogenized. After adjusting the temperature to 70°C, the dispersion was allowed to stand for 1 hour and then sprayed in a chamber at 25°C with the same rotary disc type sprayer as that in Example 1 to obtain a coated granulated product. This product was sieved through a screen having pore size of 420 $\mu$m. As the result, 96.5% of the particles passed through the screen and their calcium ascorbate content was 32.1%. The elution test in a 2% aqueous solution of metaphosphoric acid at 25°C showed that the elution rate for 60 minutes was 5.2% (calcium ascorbate determination was conducted by iodometric method).

**Claims**

1. A composition for coating an edible core material comprising a fat or oil, wax, lecithin and a higher fatty acid.

2. A composition according to claim 1, wherein the edible core material is a member selected from the group consisting of seasonings and flavors, organic acids, enzymes for food and sweeteners.

3. A composition according to claim 1, wherein the fat or oil is an edible fat or oil having a melting point of about 55 to 90°C.

4. A composition according to claim 1, wherein the higher fatty acid is a saturated or unsaturated straight-chain fatty acid having 12 to 20 carbon atoms.

5. A composition according to claim 1, wherein the composition contains 0.05 to 1.2 parts by weight of wax, 0.01 to 0.05 parts by weight of lecithin and 0.01 to 5 parts by weight of the higher fatty acid per 100 parts by weight of the fat or oil.

6. An edible core material preparation coated with a coating composition comprising a fat or oil, wax, lecithin and a higher fatty acid.

7. A preparation according to claim 6, wherein the edible core material is a member selected from the group consisting of seasonings and flavors, organic acids, enzymes for food and sweeteners.

8. A preparation according to claim 7, wherein the seasoning are 5'-ribonucleotide salts.

9. A preparation according to claim 7, wherein the organic acid is L-ascorbic acid.

10. A preparation according to claim 7, wherein the sweetener is aspartame.

11. A preparation according to claim 6, wherein the edible core material as its dehydrate is contained in an amount of 20 to 60% by weight based on the weight of the coated preparation.

12. A preparation according to claim 6, wherein the fat or oil is an edible fat or oil having a melting point of about 55 to 90°C.

13. A preparation according to claim 6, wherein the higher fatty acid is a saturated or unsaturated straight-chain fatty acid having 12 to 20 carbon atoms.

14. A preparation according to claim 6, wherein the composition contains 0.05 to 1.2 parts by weight of wax, 0.01 to 0.05 parts by weight of lecithin and 0.01 to 5 parts by weight of the higher fatty acid per 100 parts by weight of the fat or oil.

15. A process for the production of an edible core preparation which comprises coating an edible core material with a coating composition comprising a fat or oil, wax, lecithin and a higher fatty acid.

16. A process according to claim 15, wherein the edible core material is a member selected from the group consisting of seasonings and flavors, organic acids and their salts, enzymes for food and sweeteners.

17. A process according to claim 16, wherein the seasonings are 5'-ribonucleotide salts.

18. A process according to claim 16, wherein the organic acid is L-ascorbic acid and its salts.

19. A process according to claim 16, wherein the sweetener is aspartame.

20. A process according to claim 15, wherein the edible core material as its dehydrate is contained in an amount of 20 to 60% by weight based on the weight of the coated preparation.

21. A process according to claim 15, wherein the fat or oil is an edible fat or oil having a melting point of about 55 to 90°C.

22. A process according to claim 15, wherein the higher fatty acid is a saturated or unsaturated straight-chain fatty acid having 12 to 20 carbon atoms.

23. A process according to claim 15, wherein the composition contains 0.05 to 1.2 parts by weight of wax, 0.01 to 0.05 parts by weight of lecithin and 0.01 to 5 parts by weight of the higher fatty acid per 100 parts by weight of the fat or oil.

24. A process according to claim 15, wherein the coating is can be carried out by adding fine particles of the edible core material to a molten mixture of the fat or oil, the wax and lecithin and dispersing the mixture at about 60 to 105°C, admixing the higher fatty acid, adjusting a viscosity to about 60 to 800 cP and then granulating by spraying with cooling at about 10 to 35°C.

25. A process according to claim 24, wherein 0.6 to 1.1 parts by weight of wax, 0.03 to 0.05 parts by weight of lecithin and 0.5 to 2.5 parts by weight of a higher fatty acid are formulated per 100 parts by weight of a fat or oil.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 708 690 (AJINOMOTO CO., INC.) * pages 3,4, example 1; claims 1-10 * | 1-3,7,8 | A 23 L 1/22 |
| X | PATENT ABSTRACTS OF JAPAN vol. 11, no. 206 (C-433)(2653), 3 July 1987; & JP - A - 62 29 956 (AJINOMOTO CO. INC.) 07.02.1987 | 1-3,7,8 | |
| X | EP-A-0 242 831 (TAKEDA CHEMICAL INDUSTRIES LTD.) * abstract; claim 1 * | 1-3,7,8 | |
| X | EP-A-0 298 152 (TAKEDA CHEMICAL INDUSTRIES LTD.) * abstract; claims 1-15 * | 1-3,7,8 | |

|   |   |   | TECHNICAL FIELDS SEARCHED (Int. Cl.5) |
|---|---|---|---|
|   |   |   | A 23 L 1/00 |

The present search report has been drawn up for all claims

| Place of search | Date of completion of the search | Examiner |
|---|---|---|
| BERLIN | 29-03-1990 | SCHULTZE D |